# EUROPEAN PATENT APPLICATION

(11) **EP 3 651 252 A1**
(43) Date of publication of application: **13.05.2020**
(21) Application number: 18205162.3
(22) Date of filing: 08.11.2018
(51) Int. Cl.: H01M 10/0562

(54) **METHOD FOR THE PREPARATION AND PURIFICATION OF BORATE SALTS**

(71) Applicant: EMPA Eidgenössische Materialprüfungs- und Forschungsanstalt, CH-8600 Dübendorf (CH); Université de Genève, 1211 Genève (CH)
(72) Inventor: Duchêne, Leo, 8050 Zürich (CH); Kuehnel, Ruben-Simon, 8600 Dübendorf (CH); Remhof, Arndt, 8600 Dübendorf (CH); Battaglia, Corsin, 8314 Lindau (CH); Moury, Romain, 53000 Laval (FR); Hagemann, Hans, 8847 Egg (CH)
(74) Representative: Kasche, André

(57) **Abstract**

The present invention is directed to a method for the preparation and/or purification of a salt composition comprising at least two different borate anions, comprising the steps: (a) providing at least two different borate anions; (b) mixing and/or dissolving the anions in a solvent selected from the group consisting of C₂-C₆ alcohols; acetonitrile; ketone-comprising solvents, glymes, organic carbonates, ethers, C₂-C₆ thiols, DMF, DMSO and thioethers; and (c) drying the solution of step (b) to obtain a solid salt composition comprising the at least two different borate anions, optionally in the predetermined molar ratio. The invention is also directed to corresponding use of the method for the manufacture of a salt composition comprising at least two different borate anions, as well as to related products.

## Description

The present invention is directed to a method for the preparation and/or purification of a salt composition comprising at least two different borate anions, comprising the steps: (a) providing at least two different borate anions; (b) mixing and/or dissolving the anions in a solvent selected from the group consisting of C₂-C₆ alcohols; acetonitrile; ketone-comprising solvents, glymes, organic carbonates, ethers, C₂-C₆ thiols, DMF, DMSO and thioethers; and (c) drying the solution of step (b) to obtain a solid salt composition comprising the at least two different borate anions, optionally in the predetermined molar ratio. The invention is also directed to corresponding use of the method for the manufacture of a salt composition comprising at least two different borate anions, as well as to related products.

Rechargeable lithium and sodium all-solid-state batteries are considered to replace the currently used lithium-ion technology in the mid-term future. A reliable, safe, and inexpensive solid-state conductor with sufficiently high ionic conductivity is the prerequisite for this technology. Currently, several material classes such as polymers, oxides, and sulphides are under investigation. Also, an alternative material class has been developed, the complex hydride class, containing anions such as [B₁₂H₁₂]²⁻, [B₁₀H₁₀]²⁻, [BH₄]⁻, [NH₂]⁻ which provide for a stable 3 V battery with a remarkable capacity retention of 85% after 250 cycles using the electrolyte Na₄(B₁₂H₁₂)-(B₁₀H₁₀) (L. Duchene et al., Chem. Commun., 2017, 53, 4195; L. Duchene et al., Energy Environ. Sci., 2017, 10, 2609). Complex hydride-based electrolytes usually consist of two or more solid precursors, usually salts of borate anions, prepared by mechano-chemial reactions (e.g. by ball milling). These mechano-chemical reactions are associated with considerable drawbacks, such as contamination of the milled material with debris, the need to purify the product from debris and unreacted precursors, and hidden parameters such as the local temperature and pressure during the process, leading to unwanted side products and/or the decomposition of the desired product. Mechano-chemical processes are often time- and ernergy consuming, related with noise exposure and, compared to wet processes, are more complicated to scale-up for large-scale production.

Complex hydride solid electrolytes such as salts of borate anions are readily soluble in several solvents, including water. However, drying often leads to the formation of salt compositions containing residual solvent molecules, e.g. hydrates if water is used as solvent, that can have inferior properties compared to the solvent-free compositions. In addition, especially if the electrolyte contains two or more anion types, e.g. [B₁₀H₁₀]²⁻ and [B₁₂H₁₂]²⁻, the desired stoichiometry and structure of such an electrolyte can often not be retained after the drying step, i.e. the initial precursors are retained and/or other phases are formed. In the case of [B₁₀H₁₀]²⁻ and [B₁₂H₁₂]²⁻ and water as solvent, *"attempts to form a 1:1 solid solution [...] in this way proved to be unsuccessfull",* while a solid solution of the chemically related systems using [CB₉H₁₀]⁻ and [CB₁₁H₁₂]⁻ anions formed using water as a solvent were not phase pure (W. S. Tang et al., ACS Energy Lett., 2016, 1, 659). These undesired properties inhibit (i) the direct synthesis of the desired product by wet chemical methods and (ii) any processing steps that involve solvents such as casting or impregnation.

The problem underlying the present invention is the provision of an alternative and optionally improved method for preparing and/or purifying salt compositions comprising at least two different borate anions, optionally for use in solid-state electrolytes.

The problem is solved in a first aspect by the provision of a method for the preparation and/or purification of a salt composition comprising at least two different borate anions, the method comprising the steps:
(a) providing at least two different borate anions, optionally in a predetermined molar ratio,
(b) mixing and/or dissolving the anions in a solvent selected from the group consisting of: C₂-C₆ alcohols, optionally ethanol and isopropanol; acetonitrile; ketone-comprising solvents, optionally acetone, acetophenone, butanone, cyclopentanone, ethyl isopropyl ketone, 2-hexanone, isophorone, mesityl oxide, methyl isobutyl ketone, methyl isopropyl ketone, 3-methyl-2-pentanone, 2-pentanone and 3-pentanone; glymes, optionally 1,2-dimethoxyethane (monoglyme, DME, C₄H₁₀O₂) and 1-methoxy-2-(2-methoxyethoxy)ethane (diglyme, C₆H₁₄O₃); organic carbonates, optionally ethylene carbonate (EC, CH₂OH)₂) and propylene carbonate (PC, CH₃C₂H₃O₂CO); ethers, optionally tetrahydrofuran (THF, (CH₂)₄O) and dioxane (C₄H₈O₂); C₂-C₆ thiols, optionally ethanethiol and propanethiol; dimethylformamide (DMF); dimethylsulfoxide (DMSO); and thioethers, optionally C₂-C₆ thioethers, optionally dimethylsulfide;
(c) drying the solution of step (b) to obtain a solid, salt composition comprising the at least two different borate anions, optionally in the predetermined molar ratio.

It was surprisingly found that the method of the present invention is capable of producing and/or purifying a salt composition comprising at least two different borate anions (i) with little or without incorporation of solvent molecules in the solid salt composition and (ii) without significant disruption of the salt cluster formed by the at least two different borate anions, i.e. essentially under retention of the stoichiometric ratio between the two borate anions. Furthermore, the present method can provide pure salt compositions, essentially without impurities resulting from mechanical milling and associated debris.

For example, Na₄(B₁₂H₁₂)(B₁₀H₁₀) can be purified by the method of the present invention without separation of this salt composition into its precursors Na₂B₁₂H₁₂ and Na₂B₁₀H₁₀. The salt composition can be analyzed by methods known in the art, e.g., by X-ray diffraction, ionic conductivity and/or NMR methods as described in the Examples below.

In view of the above, the present method is, e.g., particularly suitable for preparing and/or purifying borate anions for use in solid-state electrolytes.

The method of the present invention is also a method for the production and/or purification of a solid-state electrolyte.

In the context of the present invention, the term "borate" is to be understood as any anionic hydride of boron, including the following anions: closo-borate, carborate, nido-borate, and arachno-borate. Optionally, the term "borate" as used herein is directed to anionic hydrides of boron that form clusters.

"Two different borate anions" according to the present invention means that the salt composition provided in step (a) and/or obtained in step (c) of the present method comprises at least two different borate anions, e.g. in the form of Na₄(B₁₂H₁₂)(B₁₀H₁₀). The salt composition may also comprise three or more borate anions in a given molar ratio, of which all are different, or of which only some, e.g. two, differ from each other.

The term "salt composition" as used herein, for example, means a defined combination of borate anions with one or more cations. For example, a salt composition can encompass a binary, ternary or quaternary boron complex or cluster.

The borate anions of step (a) of the present invention can be provided in different forms, e.g. as salts with different or the same cations. Also, the borate anions in step (a) can be prepared *in situ* from suitable starting materials by known chemical methods.

In a further embodiment, the method of the present invention is one, wherein in step (c), the solid salt composition is a crystalline salt composition of the at least two different borate anions, and/or a solid-state electrolyte. Optionally, the solid salt composition comprising at least two different borate anions of all embodiments and aspects of the present invention is a crystalline salt composition.

A crystalline salt composition, as used herein, is a salt composition that is not amorphous but that comprises a, e.g. regular and/or ordered, crystalline structure formed by the at least two different borate anions (and the accompanying cations). In other words, the salt composition of all embodiments and aspects of the present invention optionally refers to a composition, wherein the at least two different borate anions (and the accompanying cations) together form the crystal structure of the solid salt composition. Optionally, the salt composition produced and/or purified according to the method of the invention and referred to in any of the embodiments is not a composition wherein the at least two different borate anions form individual salts and/or individual crystal structures.

The chemical synthesis of borate anions is known in the art, for example, (i) R. N. Grimes, "Synthesis and serendipity in boron chemistry: A 50 year perspective", J. Organomet. Chem., vol. 7, p4-15 (2013), (ii) P. Kaszynski "Four Decades of Organic Chemistry of closo-Boranes: A Synthetic Toolbox for Constructing Liquid Crystal Materials. A Review", Collect. Czech. Chem. Commun., vol. 64, p. 895-926 (1999), and (iii) B. R.S. Hansen et al., "Metal boranes: Progress and applications", Coord. Chem. Rev., vol. 323 p. 60-70 (2016) provide an overview of borate anion chemistry.

The C₂-C₆ alcohols for use as solvent in step (b) of the method of the present invention can be any organic alcohol comprising from 2 to 6 carbon atoms, such as ethanol, propanol, butanol, pentanol or hexanol, including all corresponding linear (e.g. *n*-), branched (e.g. *sec-, tert-, iso-*and *neo*-) and cyclic (e.g. cyclobutanol, cyclopentanol or cyclohexanol) alcohol species. Also, the C₂-C₆ alcohols for use in the present invention can be substituted or non-substituted at one or more carbon atoms, e.g. by halogen(s).

The ketone-comprising solvent for use in the present invention can be any solvent that comprises a ketone functionality, e.g. acetone, acetophenone, butanone, cyclopentanone, ethyl isopropyl ketone, 2-hexanone, isophorone, mesityl oxide, methyl isobutyl ketone, methyl isopropyl ketone, 3-methyl-2-pentanone, 2-pentanone and 3-pentanone. Also, the ketone-comprising solvent for use in the present invention can be substituted or non-substituted at one or more carbon atoms, e.g. by halogen(s).

In step (b) of the present method, the at least two different anions can be fully dissolved in the solvent, or partially dissolved, e.g. if impurities or an excess of anions are present which do not dissolve in the solvent of choice. The mixing step can be implemented by any physical or acoustic mixing means, such as stirring, shaking or sonication, and may be done at room temperature, or, optionally at higher or lower temperatures.

In step (c) of the present method, the solvent is removed by drying the mixture or solution and the molar ratio of the starting material borate anions is optionally retained in the solid salt composition obtained in step (c).

In a further embodiment, in step (a) of the present method, the at least two borate anions form a salt with the same or different cations.

For example, one borate anion can be provided as a sodium salt and the other borate anion can be provided as a potassium salt. Alternatively, both borate anions are associated with the same cation.

In a further embodiment, the at least two different borate anions for use in the present method are selected from the group consisting of:
(i) BₙHₙ²⁻, wherein **n** is an integer from 4 to 12, optionally 10 or 12;
(ii) BₙHₙ₊₃⁻, wherein **n** is an integer from 1 to 11, optionally BH₄⁻ and B₁₁H₁₄⁻;
(iii) BₙHₙ₊₅⁻, wherein **n** is an integer from 3 to 10, optionally B₃H₈⁻;
(iv) BₙH_{(n-y)}X_{y}²⁻, wherein **X** is selected from F, Cl, Br and I, **n** is an integer from 4 to 12, and **y** is an integer from 1 to **n;**
(v) CBₙHₙ₊₁⁻, wherein **n** is an integer from 3 to 11, optionally 9 or 11; and
(vi) SnBₙHₙ₊₁⁻, wherein **n** is an integer from 3 to 11, optionally 9 or 11.

In another embodiment, the at least two different borate anions for use in the present method are selected from the group consisting of BH₄, B₃H₈, CB₁₁H₁₂, CB₉H₁₀, B₁₂H₁₂, B₁₀H₁₀, B₁₂Cl₁₂ and B₁₁H₁₄.

In a further embodiment, the at least two different borate anions for use in the present method form a salt with a cation selected from the group consisting of Li, Na, K, Mg, Ca, Al, Zn, Ag, NH₄⁺, HNMe₃⁺, tetrabutylammonium (TBA⁺), and tetraethylammonium (TEA⁺).

In another embodiment, the method of the present method is one, wherein the salt composition comprising at least two different borate anions is
(i) a binary or ternary combination of borate anions,
(ii) a binary combination of borate anions in a ratio of about 1:1,
(iii) a binary combination of B₁₀H₁₀ and B₁₂H₁₂, optionally in a ratio of about 1:1, or
(iv) a binary combination of Na₂B₁₀H₁₀ and Na₂B₁₂H₁₂, optionally in a ratio of about 1:1.

Optionally, the ratio of the borate anions can be from 0.6:1.4 to 1.4:0.6, optionally from 0.8:1.2 to 1.2:0.8, optionally from 0.9:1.1 to 1.1:0.9. Optionally, the ratio of the borate anions can be exactly 1:1, e.g. 1.0:1.0, 1.00:1.00 or 1.000:1.000.

In a further embodiment, the method of the present invention is one, wherein in step (b) the at least two different borate anions in the solvent are sonicated and/or (c) the solution is dried by heating, optionally at temperatures between 40 and 400°C, between 60°C and 200°C, or at about 180 °C, optionally under vacuum, optionally at about 10⁻³ mbar pressure.

In a further embodiment, about 20 mL of solvent, optionally isopropanol, is mixed with about 1 mmol of each of the at least two different borate anions in the method of the present invention.

In another embodiment, the at least two different borate anions or salts thereof for use in the present invention are synthesized, optionally simultaneously synthesized, in or before step (a) of the present method.

In another aspect, the present invention is directed to a use of the method of the present invention for the manufacture of a salt composition comprising at least two different borate anions, optionally of a crystalline salt composition and/or a solid-state electrolyte comprising at least two different borate anions, optionally comprising B₁₂H₁₂²⁻ and B₁₀H₁₀²⁻ anions.

In another embodiment, the use of the present invention is one, wherein the salt composition comprises at least two different borate anions as defined above in the context of the method of the present invention, i.e. wherein the salt composition is
(i) a binary or ternary combination of borate anions,
(ii) a binary combination of borate anions in a ratio of about 1:1,
(iii) a binary combination of B₁₀H₁₀ and B₁₂H₁₂, optionally in a ratio of about 1:1, or
(iv) a binary combination of Na₂B₁₀H₁₀ and Na₂B₁₂H₁₂, optionally in a ratio of about 1:1

In a further embodiment, the use of the present invention is one, wherein the electrolyte or composition is a Na₄[(B₁₂H₁₂)(B₁₀H₁₀)] electrolyte or composition.

In a further aspect, the present invention is directed to a product obtainable by the method according to the present invention, wherein the product has a purity of at least 98% per weight, optionally at least 99%, optionally at least 99.5%.

The state of the art methods for preparing salt compositions comprising at least two different borate anions, in particular corresponding solid-state electrolytes, rely on ball milling of the different salts to obtain the salt composition. This physical milling process can lead to impurities, e.g. from abrasion of the milling means, which are undesirable. Hence, (ball) milling is not a suitable process for obtaining high-purity salt compositions. However, the present invention provides means for preparing a salt composition comprising at least two different borate anions that was crystallized from solution, and, thus is significantly purer compared to salt compositions prepared by state of the art methods.

In a further embodiment, the product obtainable by the method according to the present invention is one, wherein the at least two different borate anions are present in about equimolar amounts, optionally wherein the borate anions are B₁₂H₁₂²⁻ and B₁₀H₁₀²⁻. Optionally, the term "equimolar" encompasses ratios of the borate anions from 0.6:1.4 to 1.4:0.6, optionally from 0.8:1.2 to 1.2:0.8, optionally from 0.9:1.1 to 1.1:0.9, optionally exactly 1:1, e.g. 1.0:1.0, 1.00:1.00 or 1.000:1.000.

In the following, the present invention will be illustrated by means of representative examples, none of which should be interpreted as limiting the scope of the invention as defined by the appended claims.

### Figures

**Fig. 1** shows a comparison of X-ray diffraction patterns of a solid composition of Na₂B₁₀H₁₀ and Na₂B₁₂H₁₂ (1:1) prepared by ball milling (top) and by the method of the present invention using isopropanol as solvent.
**Fig. 2** shows ionic conductivities of the precursors Na₂B₁₀H₁₀ and Na₂B₁₂H₁₂, of the 1:1 solid composition prepared by ball milling and the room temperature conductivity of the 1:1 solid composition prepared by the method of the present invention using isopropanol as solvent. The compositions prepared by ball milling and by the method of the present invention show identical conductivity.
**Fig. 3** shows ¹¹B NMR spectra of the 1:1 solid composition prepared by the method of the present invention using isopropanol as solvent. The resonances at -30 and -1 ppm originate from the B₁₀H₁₀ anion, the ones at -15.6ppm from the B₁₂H₁₂ anion. No other boron species were detectable and the individual anions are intact within the solid composition.
**Fig. 4** shows FTIR spectra of the 1:1 solid composition prepared by the method of the present invention using isopropanol as solvent. No stretching bands of the residual solvent is detected between 3000 and 3500 cm⁻¹, which indicates that the solvent does not form part of the solid composition.
**Fig. 5** shows X-ray diffraction patterns of the dry composition after purification by the method of the present invention using the solvents isopropanol, ethanol and methanol. Isopropanol and ethanol give similarly good results of a pure composition. Methanol on the other hand results in the two individual peaks at about 2 θ =15 (deg) as seen in the splitting of the leading peak and many more peaks.
**Fig. 6** shows X-ray diffraction patterns of the dry composition after purification by the method of the present invention using isopropanol (top) and acetonitrile (bottom).

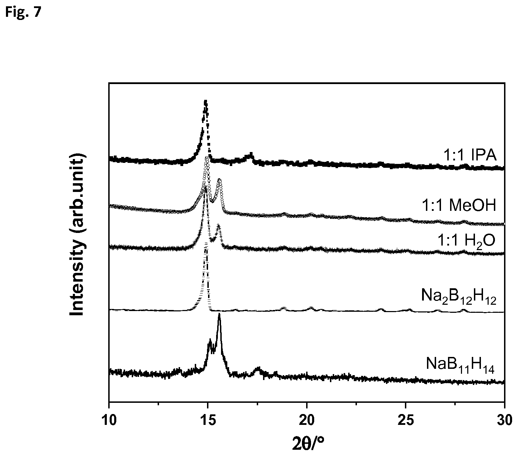

**Fig. 7** shows X-ray diffraction patterns of the dry composition after purification according to the present method of 1:1 mixtures of NaB₁₁H₁₄ and Na₂B₁₂H₁₂ from different solvents as indicated (IPA = isopropanol). The XRD patterns of the precursors are shown for comparison.

### Examples

### Example 1: Preparation and purification of Na₄(B₁₂H₁₂)(B₁₀H₁₀)

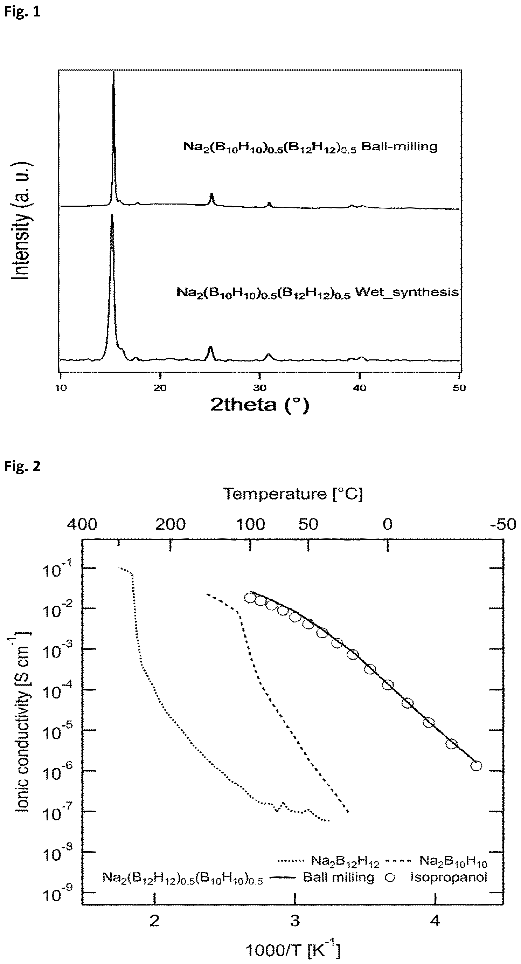

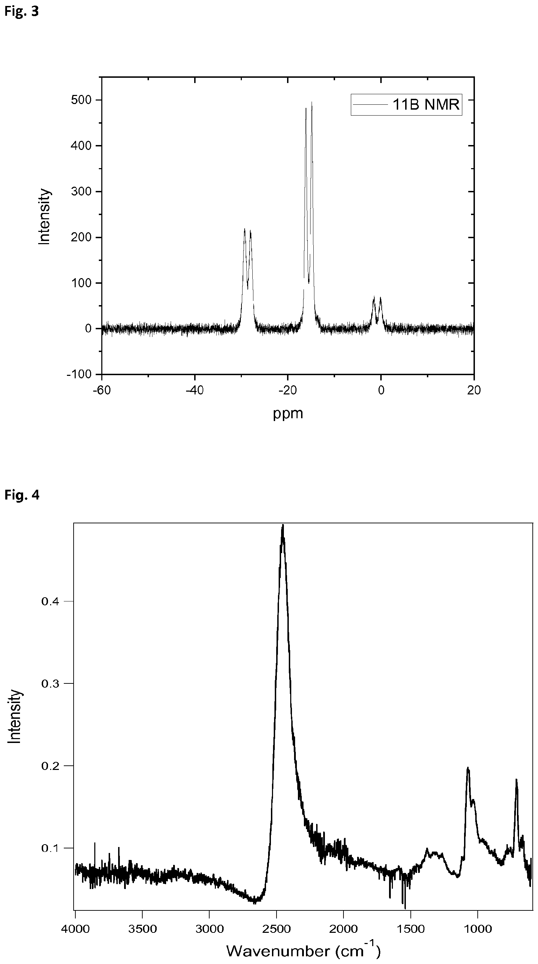

1 mmol Na₂B₁₂H₁₂ and 1 mmol Na₂B₁₀H₁₀ were mixed in 20 mL isopropanol. The solution was sonicated for about 3-5 minutes to ensure solution of the salts and to make a homogeneous solution. The solution was then dried on a rotary evaporator (water bath temperature 60 °C, pressure 140 mbar) for about 5 h and further dried on the Schlenk line until 10⁻³ mbar pressure was reached. Finally, the dry powder was placed in a vacuum oven at 180 °C for 4 h to crystalize the final phase. The desired product was a 1:1 solid composition of Na₄(B₁₂H₁₂)(B₁₀H₁₀) which was verified by X-ray diffraction analysis (see Fig. 1), room temperature conductivity (see Fig. 2) and NMR analysis (see Fig. 3). The same procedure was repeated with ethanol and methanol as solvents.

### Example 2: Comparison of solvents for the purification of Na₄(B₁₂H₁₂)(B₁₀H₁₀)

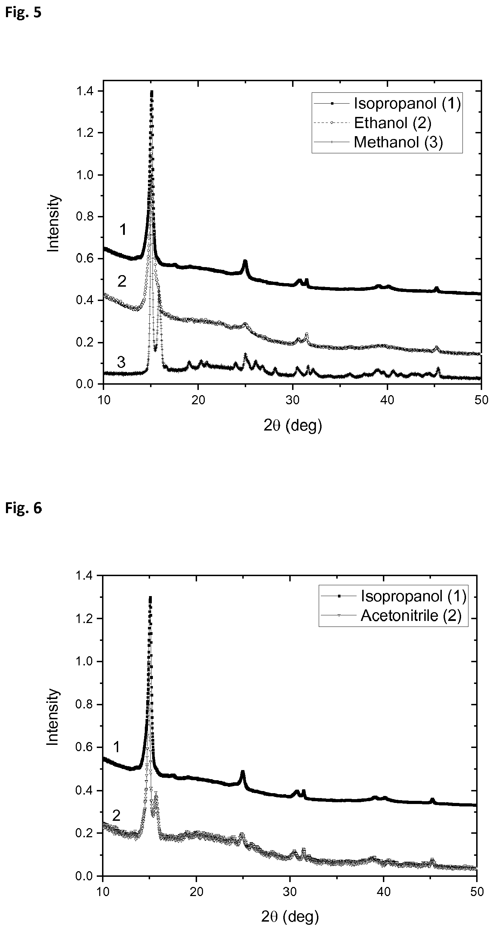

The procedure of Example 1 was repeated with the solvents isopropanol, ethanol, acetonitrile and methanol in separate experiments under the same conditions. As demonstrated in Figs. 4 and 5, isopropanol, acetonitrile and ethanol gave similar results. Methanol on the other hand resulted in the two individual peaks as seen in the splitting of the leading peak and many more peaks (see Fig.4).

### Example 3: Preparation and purification of Na₃(B₁₂H₁₂)(B₁₁H₁₄)

300 mg of Na₂B₁₂H₁₂ (0.87 mmol) and NaB₁₁H₁₄ (0.87 mmol) were mixed in 20mL isopropanol. The solution was sonicated for about 5-10 minutes to ensure complete solution of the salts and to make a homogeneous solution. The solution was then dried on a rotary evaporator (water bath temperature 80 °C, pressure 200 mbar) for about 1 h and further dried on the Schlenk line until 10⁻³ mbar pressure was reached. Finally, the dry powder was placed in a vacuum oven at 110 °C for 2 h to crystalize the final phase. Using isopropanol (IPA) as a solvent, a solid composition was achieved with a distinct crystal structure from the precursors as seen from X-ray diffraction (see Fig. 6). NMR data confirmed that the respective anions (B₁₁H₁₄⁻ and B₁₂H₁₂²⁻) were intact; no other boron species were detected. Using methanol and water as solvents lead to mixtures of the two initial phases, not to a new phase (see Fig. 6).

## Claims

1. A method for the preparation and/or purification of a salt composition comprising at least two different borate anions, the method comprising the steps:
(a) providing at least two different borate anions, optionally in a predetermined molar ratio,
(b) mixing and/or dissolving the anions in a solvent selected from the group consisting of C₂-C₆ alcohols, optionally ethanol and isopropanol; acetonitrile; ketone-comprising solvents, optionally acetone, acetophenone, butanone, cyclopentanone, ethyl isopropyl ketone, 2-hexanone, isophorone, mesityl oxide, methyl isobutyl ketone, methyl isopropyl ketone, 3-methyl-2-pentanone, 2-pentanone and 3-pentanone; glymes, optionally 1,2-dimethoxyethane and 1-methoxy-2-(2-methoxyethoxy)ethane; organic carbonates, optionally ethylene carbonate and propylene carbonate; ethers, optionally tetrahydrofuran and dioxane; C₂-C₆ thiols, optionally ethanethiol and propanethiol; dimethylformamide; dimethylsulfoxide; and thioethers;
(c) drying the solution of step (b) to obtain a solid salt composition comprising the at least two different borate anions, optionally in the predetermined molar ratio.

2. The method according to claim 1, wherein in step (c), the solid salt composition is a crystalline salt composition of the at least two different borate anions, and/or a solid-state electrolyte.

3. The method according to claim 1 or 2, wherein in step (a), the at least two borate anions form a salt with the same or different cations.

4. The method according to any of claims 1 to 3, wherein the at least two different borate anions are selected from the group consisting of:
(i) BₙHₙ²⁻, wherein **n** is an integer from 4 to 12, optionally 10 or 12;
(ii) BₙHₙ₊₃⁻, wherein **n** is an integer from 1 to 11, optionally BH₄⁻ and B₁₁H₁₄⁻;
(iii) BₙHₙ₊₅⁻, wherein **n** is an integer from 3 to 10, optionally B₃H₈⁻;
(iv) BₙH_{(n-y)}X_{y}²⁻, wherein **X** is selected from F, CI, Br and I, n is an integer from 4 to 12, and **y** is an integer from 1 to **n;**
(v) CBₙHₙ₊₁⁻, wherein **n** is an integer from 3 to 11, optionally 9 or 11; and
(vi) SnBₙHₙ₊₁⁻, wherein **n** is an integer from 3 to 11, optionally 9 or 11.

5. The method according to any of claims 1 to 4, wherein the at least two different borate anions are selected from the group consisting of: BH₄, B₃H₈, CB₁₁H₁₂, CB₉H₁₀, B₁₂H₁₂, B₁₀H₁₀, B₁₂Cl₁₂ and B₁₁H₁₄.

6. The method according to any of claims 1 to 5, wherein the at least two different borate anions form a salt with a cation selected from the group consisting of Li, Na, K, Mg, Ca, Al, Zn, Ag, NH₄⁺, HNMe₃⁺, tetrabutylammonium and tetraethylammonium.

7. The method according to any of claims 1 to 6, wherein the salt composition comprising at least two different borate anions is
(i) a binary or ternary combination of borate anions,
(ii) a binary combination of borate anions in a ratio of about 1:1,
(iii) a binary combination of B₁₀H₁₀ and B₁₂H₁₂, optionally in a ratio of about 1:1, or
(iv) a binary combination of Na₂B₁₀H₁₀ and Na₂B₁₂H₁₂, optionally in a ratio of about 1:1.

8. The method according to any of claims 1 to 7, wherein in step (b) the at least two different borate anions in the solvent are sonicated and/or (c) the solution is dried by heating, optionally at temperatures between 40 and 400°C, between 60°C and 200°C, or at about 180°C, optionally under vacuum, optionally at about 10⁻³ mbar pressure.

9. The method according to any of claims 1 to 8, wherein about 20 mL of solvent, optionally isopropanol, is mixed with about 1 mmol of each of the at least two different borate anions.

10. The method according to any of claims 1 to 9, wherein the at least two different borate anions or salts thereof are synthesized, optionally simultaneously synthesized, in step (a).

11. A use of the method according to any of claims 1 to 10 for the manufacture of a salt composition comprising at least two different borate anions, optionally of a crystalline salt composition and/or a solid-state electrolyte comprising at least two different borate anions, optionally comprising B₁₂H₁₂²⁻ and B₁₀H₁₀²⁻ anions.

12. The use according to claim 11, wherein the salt composition comprises at least two different borate anions as defined in claim 6.

13. The use according to claim 11 or 12, wherein the electrolyte or composition is a Na₄[(B₁₂H₁₂)(B₁₀H₁₀)] electrolyte or composition.

14. A product obtainable by the method according to any of claims 1 to 10, wherein the product has a purity of at least 98% per weight, optionally at least 99%, optionally at least 99.5%.

15. The product according to claim 14, wherein the at least two different borate anions are present in about equimolar amounts, optionally wherein the borate anions are B₁₂H₁₂²⁻ and B₁₀H₁₀²⁻.
